(19) Europäisches Patentamt / European Patent Office / Office européen des brevets

(11) **EP 3 948 374 B1**

(12) **FASCICULE DE BREVET EUROPEEN**

(45) Date de publication et mention de la délivrance du brevet:
**13.12.2023 Bulletin 2023/50**

(21) Numéro de dépôt: **20711993.4**

(22) Date de dépôt: **24.03.2020**

(51) Classification Internationale des Brevets (IPC):
**H04B 10/116** *(2013.01)* **G02B 19/00** *(2006.01)*
**F21V 8/00** *(2006.01)* **G02B 6/26** *(2006.01)*
**G02B 6/32** *(2006.01)* H04B 10/114 *(2013.01)*
G02B 3/08 *(2006.01)* G02B 6/42 *(2006.01)*
G02B 6/293 *(2006.01)*

(52) Classification Coopérative des Brevets (CPC):
**G02B 6/0008; G02B 6/262; G02B 19/0014;**
**H04B 10/116;** G02B 3/08; G02B 6/29364;
G02B 6/32; G02B 4/4246; G02B 6/4298

(86) Numéro de dépôt international:
**PCT/EP2020/058217**

(87) Numéro de publication internationale:
**WO 2020/200930 (08.10.2020 Gazette 2020/41)**

(54) **SYSTEME DE COMMUNICATION COMPORTANT UN ENSEMBLE A FIBRE OPTIQUE, UN RECEPTEUR DE SIGNAUX LUMINEUX MODULES ET UN TELESCOPE**

KOMMUNIKATIONSSYSTEM MIT EINER FASEROPTISCHEN ANORDNUNG, EINEM EMPFÄNGER FÜR MODULIERTE LICHTSIGNALE UND EINEM TELESKOP

COMMUNICATION SYSTEM COMPRISING A FIBRE OPTIC ASSEMBLY, A MODULATED LIGHT SIGNAL RECEIVER AND A TELESCOPE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.03.2019 FR 1903381**

(43) Date de publication de la demande:
**09.02.2022 Bulletin 2022/06**

(73) Titulaire: **Oledcomm**
**78140 Velizy Villacoublay (FR)**

(72) Inventeurs:
• **VALENCIA-ESTRADA, Juan Camilo**
**78140 Velizy Villacoublay (FR)**
• **GARCIA-MARQUEZ, Jorge**
**78180 Montigny Le Bretonneux (FR)**
• **ESPINOZA-GARCIA, Alejandro**
**78370 Plaisir (FR)**

(74) Mandataire: **Bonnet, Michel**
**Cabinet Bonnet**
**93, rue Réaumur**
**75002 Paris (FR)**

(56) Documents cités:
WO-A1-00/25163       CN-A- 101 266 321
CN-A- 101 271 178     CN-A- 101 446 668
CN-A- 107 450 133     US-A- 5 602 668
US-A1- 2015 341 113

• ZHOU GENDI ET AL: "Design of Plastic Optical Fiber Coupling system based on GRIN Lens for Enlarging the Field-of-View of VLC System", 2017 ASIA COMMUNICATIONS AND PHOTONICS CONFERENCE (ACP), THE OPTICAL SOCIETY, 10 novembre 2017 (2017-11-10), pages 1-3, XP033523475,

**Description**

L'invention concerne le domaine des systèmes de communication comportant un ensemble à fibre optique et un récepteur de signaux lumineux modulés.

ARRIERE PLAN DE L'INVENTION

On connaît des systèmes de communication comportant une lampe à diodes électroluminescentes (appelée ici lampe à LED) et mettant en œuvre une technologie dite « VLC » (pour Visible Light Communication). Un tel système de communication permet à la fois d'éclairer l'environnement de la lampe à LED, et d'émettre et de recevoir des signaux lumineux modulés pour permettre une communication sans fil entre le système de communication et un appareil électronique situé à proximité de la lampe à LED.

Dans ce type de système de communication, des fils électriques sont nécessaires pour acheminer vers la lampe à LED des courants d'alimentation des composants dont est munie la lampe à LED. Ces composants comprennent un émetteur de lumière visible (incluant une ou des LED), un émetteur de signaux lumineux modulés (incluant une ou des LED), un récepteur de signaux lumineux modulés (incluant par exemple une ou des photodiodes).

Or, dans certains environnements, ces fils électriques sont très problématiques.

On sait par exemple que certains fabricants d'aéronefs cherchent à installer de tels systèmes de communication dans les cabines d'aéronef, de manière à éclairer les passagers et à créer des réseaux de communication utilisant la technologie VLC et intégrant les appareils électroniques des passagers.

Ces réseaux de communication permettent aux passagers non seulement d'accéder de manière simple et pratique à des données multimédia diverses, mais aussi, éventuellement, d'accéder au réseau internet. La technologie VLC est particulièrement intéressante dans l'environnement d'une cabine d'aéronef, car, contrairement aux technologies de radiocommunication, la technologie VLC ne génère pas d'interférence électromagnétique et ne rencontre pas de problème de disponibilité du spectre des fréquences.

Cependant, tout équipement électrique installé dans un aéronef doit respecter des normes particulièrement contraignantes en matière d'émission et de susceptibilité aux radiofréquences.

Or, les fils électriques ont tendance à émettre des radiofréquences, et à rendre susceptibles aux radiofréquences les équipements électriques qu'ils relient. Le nombre et la longueur des fils électriques nécessaires pour éclairer tous les passagers et leur donner accès à la technologie VLC rendent très complexe l'intégration dans la cabine d'un système de communication mettant en oeuvre la technologie VLC.

Le document WO 00/25163 A1 divulgue un système de communication. Le document ZHOU GENDI ET AL: "Design of Plastic Optical Fiber Coupling system based on GRIN Lens for Enlarging the Field-of-View of VLC System",2017 ASIA COMMUNICATIONS AND PHOTONICS CONFERENCE (ACP), THE OPTICAL SOCIETY, 10 novembre 2017 divulgue un système VLC.

OBJET DE L'INVENTION

L'invention a pour objet un système de communication mettant en oeuvre une technologie VLC, dans lequel la longueur des fils électriques est réduite et dans lequel la réception des signaux lumineux modulés est optimisée.

RESUME DE L'INVENTION

En vue de la réalisation de ce but, on propose un système de communication comportant un ensemble à fibre optique, un récepteur de signaux lumineux modulés et un télescope, le récepteur de signaux lumineux modulés étant positionné à une extrémité de réception de l'ensemble à fibre optique, le télescope étant positionné à une extrémité de collecte de l'ensemble à fibre optique, le récepteur de signaux lumineux modulés étant agencé pour recevoir des signaux lumineux modulés montants collectés par le télescope et cheminant dans l'ensemble à fibre optique, le télescope comprenant un concentrateur optique ayant une face d'entrée et une face de sortie de surface inférieure à celle de la face d'entrée, le télescope comprenant en outre une lentille à gradient d'indice disposée par rapport au concentrateur optique de sorte qu'une face d'entrée de la lentille à gradient d'indice s'étend en regard de la face de sortie du concentrateur optique, l'extrémité de collecte de l'ensemble à fibre optique débouchant en regard d'une face de sortie de la lentille à gradient d'indice.

Dans le système de communication selon l'invention, le récepteur de signaux lumineux modulés est séparé par un ensemble à fibre optique du télescope qui collecte les signaux lumineux modulés montants.

Cet ensemble à fibre optique peut avoir une longueur relativement importante et se substitue à des fils électriques ayant des longueurs équivalentes.

Le télescope permet de collecter très efficacement des rayons lumineux incidents, et donc d'améliorer la réception de signaux lumineux modulés montants transmis par un dispositif d'émission situé à proximité du télescope.

L'invention sera mieux comprise à la lumière de la description qui suit de modes de mise en oeuvre particuliers non limitatifs de l'invention.

BREVE DESCRIPTION DES DESSINS

Il sera fait référence aux dessins annexés, parmi lesquels :

- [Fig. 1] la figure 1 représente un système de communication selon un premier mode de réalisation de l'invention ;
- [Fig. 2] la figure 2 représente le système de communication selon le premier mode de réalisation de l'invention ;
- [Fig. 3] la figure 3 est une vue schématique et fonctionnelle analogue à celle de la figure 2, sur laquelle sont représentés un premier filtre dichroïque et un deuxième filtre dichroïque ;
- [Fig. 4] la figure 4 représente un ensemble à fibre optique du système de communication selon le premier mode de réalisation de l'invention ;
- [Fig. 5] la figure 5 est un graphique sur lequel sont représentées une courbe de transmittance et une courbe de réflectance du premier filtre dichroïque ;
- [Fig. 6] la figure 6 est un graphique sur lequel sont représentées une courbe de transmittance et une courbe de réflectance du deuxième filtre dichroïque ;
- [Fig. 7] la figure 7 représente un télescope du système de communication selon le premier mode de réalisation de l'invention ;
- [Fig. 8] la figure 8 représente un télescope d'un système de communication selon un deuxième mode de réalisation de l'invention ;
- [Fig. 9] la figure 9 représente un télescope d'un système de communication selon un troisième mode de réalisation de l'invention.

DESCRIPTION DETAILLEE DE L'INVENTION

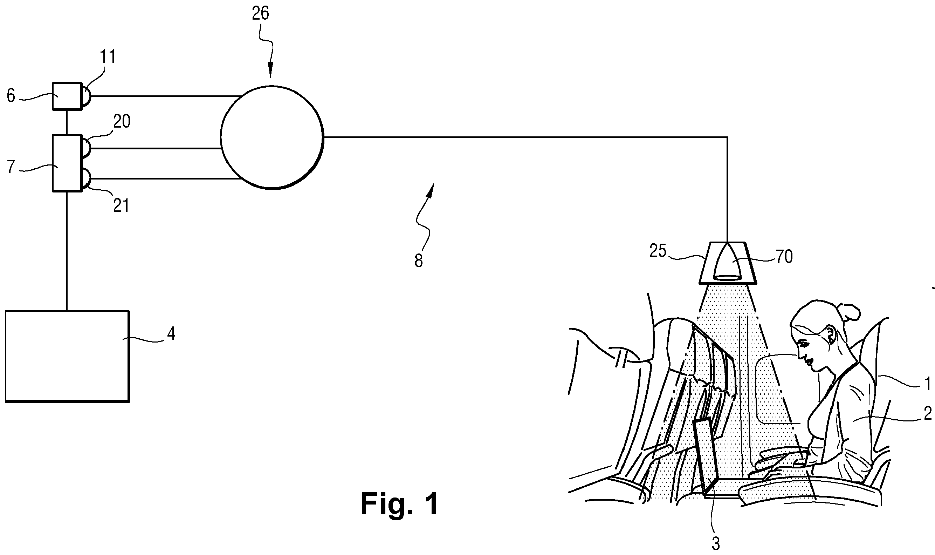

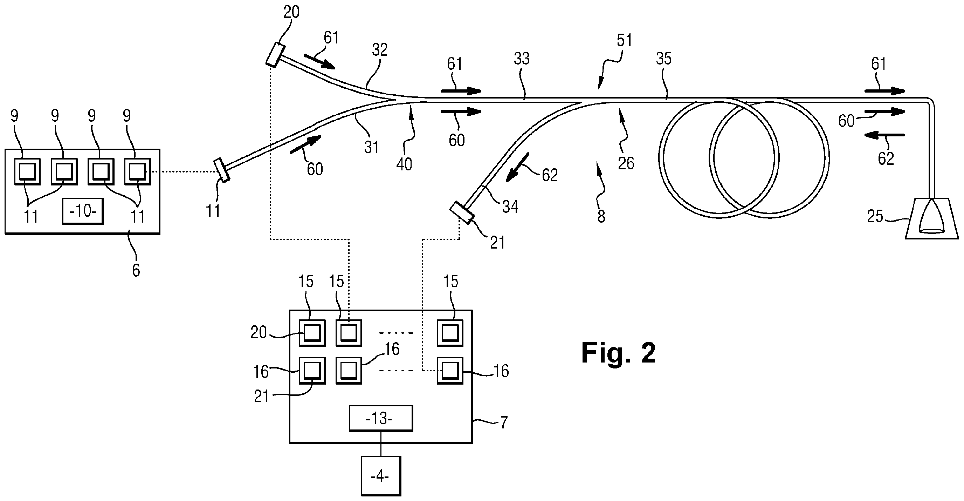

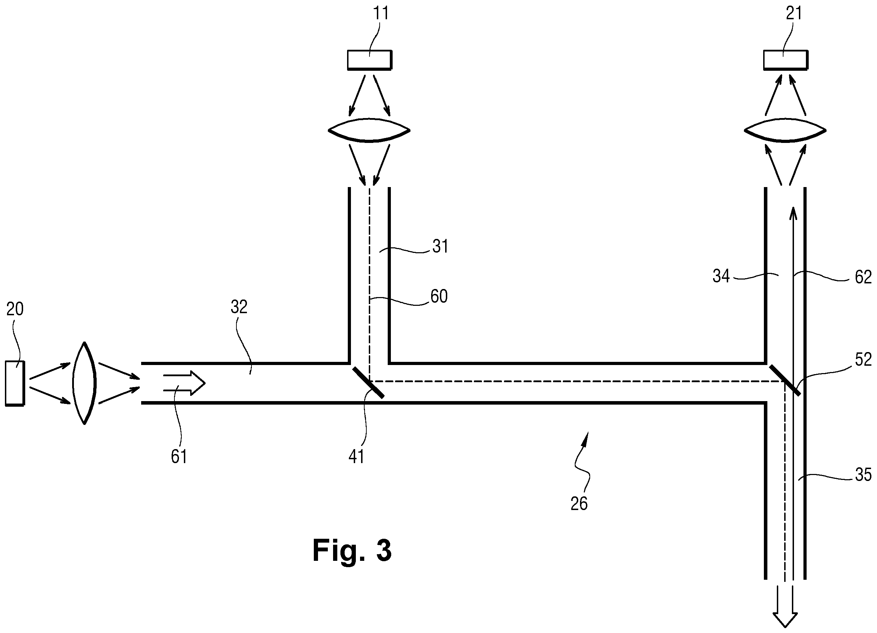

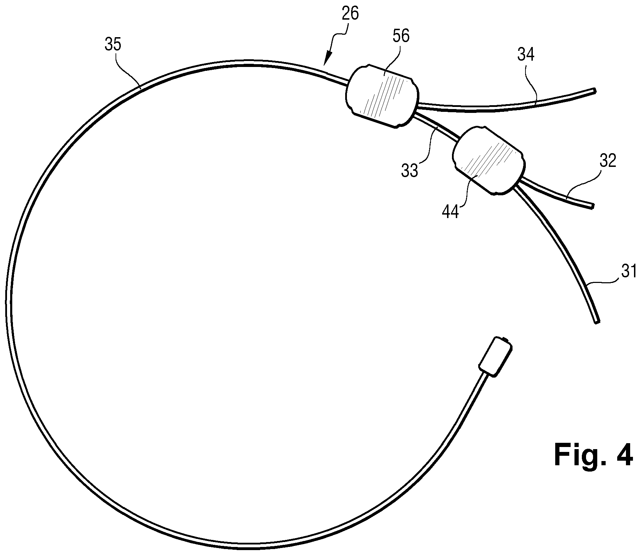

En référence aux figures 1 à 4, l'invention est ici mise en oeuvre dans une cabine d'aéronef. La cabine d'aéronef comprend une pluralité de sièges 1 destinés chacun à accueillir un passager 2. Chaque passager 2 dispose ainsi d'un espace personnel. Chaque passager 2 est possiblement muni d'un appareil électronique 3, qui est par exemple un ordinateur portable, un smartphone, une tablette, une montre connectée, etc.

Le système de communication selon un premier mode de réalisation de l'invention est destiné à éclairer chaque passager 2, et à mettre en oeuvre une technologie VLC pour permettre à chaque passager 2 de communiquer, grâce à son appareil électronique 3, avec un terminal informatique 4 de l'aéronef. Chaque passager 2 peut ainsi accéder à des données multimédia diverses stockées dans le terminal informatique 4, et peut aussi accéder au réseau internet via le terminal informatique 4.

Pour communiquer avec le terminal informatique 4 de l'aéronef, l'appareil électronique 3 du passager 2 doit être muni d'un dispositif d'émission et de réception VLC. Le dispositif d'émission et de réception VLC est soit directement intégré dans l'appareil électronique 3, soit est relié à l'appareil électronique 3. Le dispositif d'émission et de réception VLC est ainsi par exemple un dongle (terme anglais, traduit parfois en français par « sentinelle ») relié à l'appareil électronique 3, éventuellement via un port USB de l'appareil électronique 3.

Le système d'éclairage et de communication comporte ici un module d'éclairage centralisé 6, un module de communication centralisé 7, et une pluralité de dispositifs d'éclairage 8, chaque dispositif d'éclairage 8 étant associé à un espace personnel.

Le module d'éclairage centralisé 6 comporte des émetteurs de lumière visible 9, chaque émetteur de lumière visible 9 étant associé à un espace personnel, et des composants de pilotage 10. Chaque émetteur de lumière visible 9 comprend une première diode électroluminescente (LED) 11.

Lorsqu'il convient d'éclairer un espace personnel d'un passager 2, les composants de pilotage 10 génèrent un courant d'alimentation à destination de la première LED 11 de l'émetteur de lumière visible 9 associé à l'espace personnel. La première LED 11 génère, à partir du courant d'alimentation, une lumière dont le spectre est contenu dans le domaine du visible.

Le module de communication centralisé 7 comporte un modem 13, et une pluralité d'émetteurs de signaux lumineux modulés 15 et de récepteurs de signaux lumineux modulés 16, une paire formée d'un émetteur de signaux lumineux modulés 15 et d'un récepteur de signaux lumineux modulés 16 étant associée à un espace personnel d'un passager 2.

Le modem 13 est relié électriquement aux émetteurs de signaux lumineux modulés 15 et aux récepteurs de signaux lumineux modulés 16.

Le modem 13 est aussi relié électriquement au terminal informatique 4 de l'aéronef, par exemple via un câble Ethernet.

Chaque émetteur de signaux lumineux modulés 15 comprend une deuxième LED 20. Les deuxièmes LED 20 produisent une lumière dont le spectre est contenu dans le domaine infrarouge.

Chaque récepteur de signaux lumineux modulés 16 comprend une photodiode 21. La photodiode 21 est ici une photodiode à avalanche, sensible à une lumière dont le spectre est contenu dans le domaine infrarouge.

Lorsqu'une communication est établie entre le terminal informatique 4 et un dispositif d'émission et de réception VLC d'un espace personnel, le modem 13 acquiert des données descendantes provenant du terminal informatique 4. Le modem 13 produit un courant d'alimentation à destination de la deuxième LED 20 de l'émetteur de signaux lumineux modulés 15 correspondant. Le courant d'alimentation commute la deuxième LED 20, de manière à commuter une puissance lumineuse produite par la deuxième LED 20 pour générer des signaux lumineux modulés descendants à destination du dispositif d'émission et de réception VLC de l'espace personnel, lesdits signaux lumineux modulés descendants contenant les données descendantes.

De même, la photodiode 21 du récepteur de signaux lumineux modulés 16 correspondant reçoit des signaux lumineux modulés montants provenant du dispositif d'émission et de réception VLC de l'appareil électronique 3 du passager 2 de l'espace personnel. La photodiode 21 transforme les signaux lumineux modulés montants en signaux électriques contenant des données montantes.

Le modem 13 acquiert les signaux électriques contenant les données montantes.

Le modem 13 reçoit donc l'ensemble des données montantes et descendantes échangées entre le terminal informatique 4 et les appareils électroniques 3 des passagers 2, et met en forme ces données pour les rendre compatibles, d'une part, avec les deuxièmes LED 20, et d'autre part, avec les récepteurs du terminal informatique 4.

On note ici que le module d'éclairage centralisé 6 et le module de communication centralisé 7 peuvent être agencés sur une ou plusieurs cartes électriques, distinctes ou non, positionnées dans un même boîtier ou dans plusieurs boîtiers. Les boîtiers peuvent être rapprochés ou au contraire éloignés, et être situés dans la cabine ou à tout autre endroit à l'intérieur de l'aéronef.

Chaque dispositif d'éclairage 8 comprend un diffuseur de lumière 25 et un ensemble à fibre optique 26.

Le diffuseur de lumière 25 s'étend au-dessus de l'espace personnel d'un passager 2 et permet à la fois d'éclairer l'espace personnel et d'échanger des signaux lumineux modulés montants et descendants avec le dispositif d'émission et de réception VLC de l'appareil électronique 3 du passager 2. Le diffuseur de lumière 25 joue ainsi à la fois le rôle d'une lentille de lampe, et le rôle d'un injecteur de lumière montante dans l'ensemble à fibre optique 26.

L'ensemble à fibre optique 26 comprend une première portion de fibre optique 31, une deuxième portion de fibre optique 32, une troisième portion de fibre optique 33, une quatrième portion de fibre optique 34 et une cinquième portion de fibre optique 35.

Un émetteur de lumière visible 9 est positionné à une première extrémité de la première portion de fibre optique 31. Plus précisément, la première extrémité de la première portion de fibre optique 31 et une première LED 11 s'étendent en regard l'une de l'autre et sont couplées optiquement via une lentille. On appellera aussi « extrémité d'éclairage » la première extrémité de la première portion de fibre optique 31.

Un émetteur de signaux lumineux modulés 15 est positionné à une première extrémité de la deuxième portion de fibre optique 32. Plus précisément, la première extrémité de la deuxième portion de fibre optique 32 et une deuxième LED 20 s'étendent en regard l'une de l'autre et sont couplées optiquement via une lentille. On appellera aussi « extrémité d'émission » la première extrémité de la deuxième portion de fibre optique 32.

Une deuxième extrémité de la première portion de fibre optique 31 et une deuxième extrémité de la deuxième portion de fibre optique 32 sont couplées et raccordées, au niveau d'une première zone de raccord 40, à une première extrémité de la troisième portion de fibre optique 33. Le couplage est réalisé selon une méthode classique de couplage de fibre optique.

La deuxième extrémité de la première portion de fibre optique 31 et la deuxième extrémité de la deuxième portion de fibre optique 32 se rejoignent donc dans la première zone de raccord 40 pour déboucher au niveau de la première extrémité de la troisième portion de fibre optique 33.

La deuxième extrémité de la première portion de fibre optique 31, la deuxième extrémité de la deuxième portion de fibre optique 32 et la première extrémité de la troisième portion de fibre optique 33 forment ainsi un premier coupleur 2x1.

Un premier filtre dichroïque 41 est intégré dans la première zone de raccord 40. Le premier filtre dichroïque 41 est composé d'une grande quantité de couches minces. Le premier filtre dichroïque 41 s'étend dans une section de la deuxième extrémité de la deuxième portion de fibre optique 32, légèrement en amont de la zone de contact entre la deuxième extrémité de la première portion de fibre optique 31 et la deuxième extrémité de la deuxième portion de fibre optique 32. Par « en amont », on entend du côté d'une LED ou d'une photodiode et non du côté du diffuseur de lumière 25.

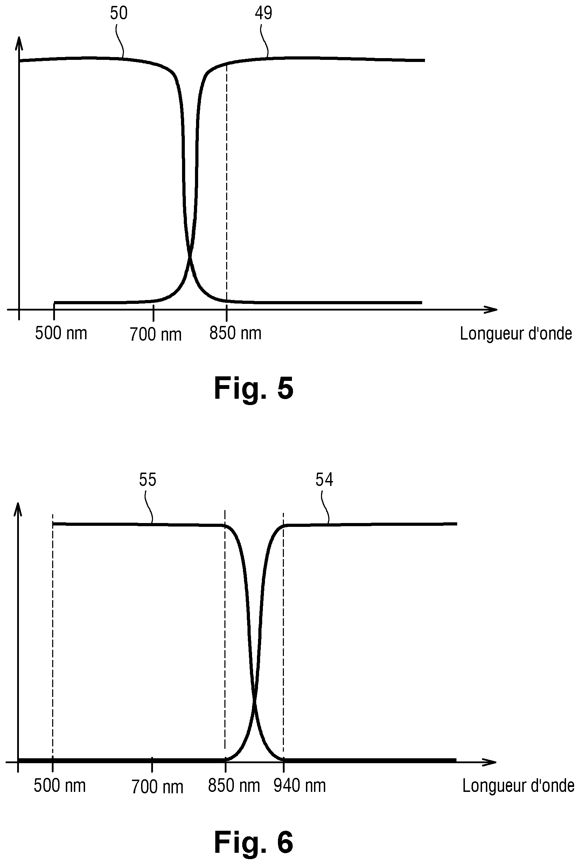

La courbe de transmittance 49 et la courbe de réflectance 50 du premier filtre dichroïque 41 sont représentées sur la figure 5.

On voit que le premier filtre dichroïque 41 laisse passer les signaux lumineux dont la longueur d'onde est supérieure ou égale à 850nm et réfléchit ceux dont la longueur d'onde est inférieure ou égale à 700nm.

Le rôle du premier filtre dichroïque 41 est d'éviter les retours de lumière dans la deuxième portion de fibre optique 32, et donc les pertes sur la première portion de fibre optique 31.

La première zone de raccord 40 est intégrée dans un premier boîtier 44 d'un premier multiplexeur.

Un récepteur de signaux lumineux modulés 16 est positionné à une première extrémité de la quatrième portion de fibre optique 34. Plus précisément, la première extrémité de la quatrième portion de fibre optique 34 et une photodiode 21 s'étendent en regard l'une de l'autre et sont couplées optiquement via une lentille. On appellera aussi « extrémité de réception » la première extrémité de la quatrième portion de fibre optique 34.

Une deuxième extrémité de la troisième portion de fibre optique 33 et une deuxième extrémité de la quatrième portion de fibre optique 34 sont couplées et raccordées, au niveau d'une deuxième zone de raccord 51, à une première extrémité de la cinquième portion de fibre optique 35. Le couplage est à nouveau réalisé selon une méthode classique de couplage de fibre optique.

La deuxième extrémité de la troisième portion de fibre optique 33 et la deuxième extrémité de la quatrième portion de fibre optique 34 se rejoignent dans la deuxième zone de raccord 51 pour déboucher au niveau de la première extrémité de la cinquième portion de fibre optique 35.

La deuxième extrémité de la troisième portion de fibre optique 33, la deuxième extrémité de la quatrième portion de fibre optique 34 et la première extrémité de la cinquième portion de fibre optique 35 forment ainsi un deuxième coupleur 2x1.

Un deuxième filtre dichroïque 52 est intégré dans la deuxième zone de raccord 51. Le deuxième filtre dichroïque 52 est composé d'une grande quantité de couches minces. Le deuxième filtre dichroïque 52 s'étend dans une section de la deuxième extrémité de la quatrième portion de fibre optique 34, légèrement en amont de la zone de contact entre la deuxième extrémité de la troisième portion de fibre optique 33 et la deuxième extrémité de la quatrième portion de fibre optique 34.

La courbe de transmittance 54 et la courbe de réflectance 55 du deuxième filtre dichroïque 52 sont représentées sur la figure 6.

On voit que le deuxième filtre dichroïque 52 laisse passer les signaux lumineux dont la longueur d'onde est supérieure ou égale à 940nm et réfléchit ceux dont la longueur d'onde est inférieure ou égale à 850nm.

Le rôle du deuxième filtre dichroïque 52 est de séparer les différentes longueurs d'onde.

La deuxième zone de raccord 51 est intégrée dans un deuxième boîtier 56 d'un deuxième multiplexeur.

On note que le diamètre de chaque portion de fibre est indifférent, et pourrait pas exemple être compris entre 0,2mm et 3mm. Les portions de fibre peuvent être fabriquées en verre ou en plastique ou en tout autre matériau.

On note ici que la première portion de fibre optique 31, destinée à l'éclairage, est une fibre multimode, que la deuxième portion de fibre optique 32, destinée à la transmission de données, peut aussi être une fibre multimode, et que la troisième portion de fibre optique 33 est donc aussi une fibre multimode. Ceci est vrai aussi pour la quatrième portion de fibre optique 34 et la cinquième portion de fibre optique 35.

Le système de communication et d'éclairage fonctionne, pour chaque espace personnel, de la manière suivante.

Une première LED 11 produit une lumière visible 60. La lumière visible 60 se propage dans la première portion de fibre 31, est réfléchie par le premier filtre dichroïque 41, qui empêche la lumière visible 60 de se propager dans la deuxième portion de fibre optique 32.

Le deuxième filtre dichroïque 52 laisse passer la lumière visible 60 en sens descendant, qui se propage dans la cinquième portion de fibre optique 35. La deuxième extrémité de la cinquième portion de fibre optique 35 débouche sur l'extérieur de l'ensemble à fibre optique 26, en l'occurrence dans le diffuseur de lumière 25. La lumière visible est émise via la deuxième extrémité de la cinquième portion de fibre optique 35 et via le diffuseur de lumière 25 pour éclairer l'espace personnel du passager 2.

Une communication descendante est par ailleurs établie entre un émetteur de signaux lumineux modulés 15 et le dispositif d'émission et de réception VLC de l'appareil électronique 3 du passager 2. Des signaux lumineux modulés descendants 61, contenant des données descendantes provenant du terminal informatique 4, sont émis par une deuxième LED 20. Les signaux lumineux modulés descendants 61 présentent une longueur d'onde égale à 850nm. Les signaux lumineux modulés descendants 61 se propagent dans la deuxième portion de fibre optique 32, et ne sont pas bloqués mais sont transmis par le premier filtre dichroïque 41 pour se propager dans la troisième portion de fibre optique 33 (voir la courbe de transmittance 49 et la courbe de réflectance 50).

Les signaux lumineux modulés descendants 61 se propagent ensuite dans la troisième portion de fibre optique 33. Le deuxième filtre dichroïque 52 ne laisse pas passer les signaux lumineux modulés descendants 61 dans la quatrième portion de fibre optique 34 (voir la courbe de transmittance 54 et la courbe de réflectance 55). Les signaux lumineux modulés descendants 61 se propagent donc dans la cinquième portion de fibre optique 35, sont émis via la deuxième extrémité de la cinquième portion de fibre 35 et via le diffuseur de lumière 25, et sont transmis au dispositif d'émission et de réception VLC de l'appareil électronique 3 du passager 2.

L'appareil électronique 3 acquiert alors les données descendantes.

Une communication montante est par ailleurs établie entre le dispositif d'émission et de réception VLC de l'appareil électronique 3 du passager 2 et un récepteur de signaux lumineux modulés 16. Des signaux lumineux modulés montants 62, contenant des données montantes à destination du terminal informatique 4, sont émis par le dispositif d'émission et de réception VLC. Les signaux lumineux modulés montants 62 présentent une longueur d'onde égale à 950nm. Les signaux lumineux modulés montants 62 sont captés par le diffuseur de lumière 25. Les signaux lumineux modulés montants 62 se propagent dans la cinquième portion de fibre optique 35 via la deuxième extrémité de la cinquième portion de fibre optique 35. Le deuxième filtre dichroïque 52 laisse passer les signaux lumineux modulés montants 62 dans la quatrième portion de fibre optique 34. Les signaux lumineux modulés montants 62 se propagent donc en transmission dans la quatrième portion de fibre optique 34 et sont captés par la photodiode 21 du récepteur de signaux lumineux modulés 16.

Le modem 13 du module de communication centralisé 7 acquiert alors les données montantes et les transmet au terminal informatique 4.

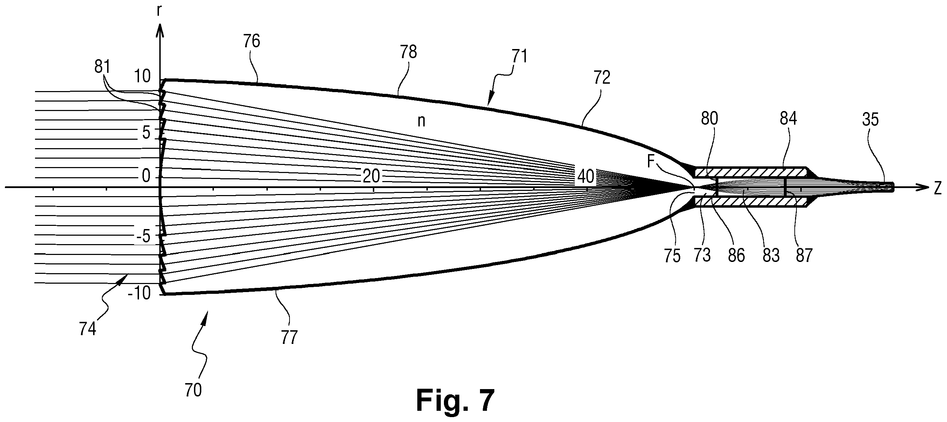

En référence à la figure 7, un télescope 70 est positionné à une deuxième extrémité de la cinquième portion de fibre optique 35. On appellera aussi « extrémité de collecte » la deuxième extrémité de la cinquième portion de fibre optique 35.

Par « télescope », on entend ici un instrument optique qui forme, à partir d'un objet situé d'un côté du télescope et à une distance objet infinie de celui-ci, une image de l'objet située de l'autre côté du télescope et à une distance image infinie de celui-ci.

Par « distance objet infinie » et par « distance image infinie », on entend ici des distances très grandes par rapport au diamètre de la surface de la face correspondante du télescope, c'est-à-dire typiquement supérieures à 10 ou 100 fois un plus grand diamètre du télescope.

Le télescope 70 comporte tout d'abord un concentrateur optique 71. Le concentrateur 71 est ici un concentrateur elliptique composé.

Le concentrateur 71 présente un axe de révolution Z. Le concentrateur 71 comprend une portion principale 72 et une portion cylindrique 73.

La forme extérieure de la portion principale 72 est définie par une surface latérale 78 qui s'étend entre une face d'entrée 74 et une extrémité de sortie 75.

La face d'entrée 74 du concentrateur 71 est aussi une face d'entrée du télescope 70. L'extrémité de sortie 75 a la forme d'un disque. La face d'entrée 74 et l'extrémité de sortie 75 s'étendent perpendiculairement à l'axe Z.

La surface de la face d'entrée 74 est supérieure à la surface de l'extrémité de sortie 75.

La surface latérale 78 est définie, dans un plan de coupe passant par l'axe Z, par un premier arc d'ellipse 76 et par un deuxième arc d'ellipse 77.

On note ici que le concentrateur 71 peut être conçu à partir de toute surface courbée du type « non réglée » (c'est à dire ne contenant pas de ligne droite). Ceci inclut toutes les surfaces dites libres, c'est-à-dire les surfaces décrites par une courbe au sommet, par une constante conique, par des coefficients de déformation non-nuls, et finalement par un angle de rotation. Cet angle de rotation n'est autre que l'angle de rotation de la surface définie comme étant la surface de base de départ de la conception optique du concentrateur 71. La surface de base est par exemple une ellipse de révolution, ou bien une surface non réglée quelconque. L'angle de rotation caractérise ainsi tout concentrateur composé.

Il faut noter que la surface latérale 78 de la portion principale 72 du concentrateur 71 du système d'éclairage peut présenter une ou plusieurs facettes latérales du type prismatique.

L'extrémité de sortie 75 débouche dans la portion cylindrique 73 qui présente une section égale à la surface de l'extrémité de sortie 75. Une face de sortie 80 de la portion cylindrique 73 forme une face de sortie 80 du concentrateur 71. La surface de la face de sortie 80 du concentrateur 71 est inférieure à la surface de la face d'entrée 74 du concentrateur 71 et du télescope 70.

On décrit maintenant la face d'entrée 74.

Il serait possible de prévoir que la face d'entrée 74 présente une surface définie par un ovale cartésien.

Dans le repère cylindrique (r, Z(r)), cet ovale cartésien aurait pour équation :

$$z_a(r) = \frac{c_a\, r^2}{1 + \sqrt{1 - (1 + K_a)(c_a r)^2}} + \sum_{j=2}^{7} A_{2j}\, r^{2j} \; ,$$

où $c_a$ est la courbure au sommet de l'ovale cartésien (on parle aussi, en anglais, de vertex curvature), $K_a$ est une constante conique, et les $A_{2j}$ sont des coefficients de déformation. On suppose que la face d'entrée 74 présente un indice de réfraction relatif n et accepte de la lumière en provenance d'une source de lumière alignée sur l'axe optique à une distance focale objet $t_a$. La face d'entrée 74 produit alors une image limitée par diffraction (car la face d'entrée 74 n'introduit pas d'aberration sphérique) à une distance focale image $t'_a$.

Les paramètres de l'équation de l'ovale cartésien peuvent être calculés en utilisant les variables récurrentes :

$$m=n-1, \quad p=n+1, \quad U=nt_a-t'_a, \quad \text{et} \quad V=2mt_at'_a.$$

La courbure au sommet $c_a$ est telle que :

$$c_a=2U/V.$$

Un exemple d'un ensemble de coefficients de déformation $A_{2j}$ est fourni en Annexe 1, à la fin de cette description.

Un exemple d'un ensemble de polynômes caractéristiques $P_{2j}$, utilisés dans la définition des coefficients de déformation $A_{2j}$, est fourni en Annexe 2, à la fin de cette description.

Ici, cependant, comme cela est visible sur la figure 7, la face d'entrée 74 a pour surface une surface de Fresnel, et joue donc le rôle d'une lentille de Fresnel.

La surface de Fresnel est orientée vers l'extérieur et comporte une pluralité de zones 81 présentant la forme de sections annulaires concentriques centrées sur l'axe Z. Les sections annulaires concentriques sont définies par des échelons qui s'étendent vers l'extérieur de la face d'entrée 74.

L'utilisation de la surface de Fresnel permet de réduire le volume de la face d'entrée 74 du télescope 70 (et donc le volume et la masse du télescope 70).

La surface de Fresnel est définie par une fonction par morceaux, chaque morceau correspondant à une zone 81 présentant la forme d'une section annulaire concentrique centrée sur l'axe Z.

Chaque morceau présente une surface définie par un ovale cartésien.

La surface de Fresnel ici mise en oeuvre n'introduit pas d'aberration sphérique, ce qui permet de concentrer parfaitement les rayons lumineux incidents au niveau du foyer image de la lentille de Fresnel constituée par la face d'entrée 74. Le foyer image F est situé au centre de l'extrémité de sortie 75 de la portion principale 72 du concentrateur 71.

Pour définir la surface de Fresnel, on met en oeuvre un procédé de définition comprenant les étapes suivantes :

Etape 1 :
On définit une hauteur h pour chaque morceau (h peut varier ou être constante) ;
Etape 2 :
On définit le diamètre d de la surface du morceau ;
Etape 3 :
On initialise un compteur de morceaux i = 1 (chaque morceau est associé à une valeur distincte de i) ;
Etape 4 :
Tant que l'abscisse $r_s(i) \leq d/2$, le procédé de définition progresse ;
Etape 5 :
On définit le morceau i en utilisant l'équation

$$z_a(r) = (1-i)\,h + \frac{c_a\,r^2}{1+\sqrt{1-(1+K_a)(c_a\,r)^2}} + \sum_{j=2}^{7} A_{2j}\,r^{2j}$$

Les paramètres sont identiques à ceux utilisés plus tôt pour l'ovale cartésien, si ce n'est que la distance focale objet $t_a$ et la distance focale image $t'_a$ sont compensées :

$$t_a=t_a-(i-1)h \ ;$$

$$t'_a=t'_a+(i-1)h.$$

On obtient donc $Z_a$ qui dépend des paramètres suivants :
$Z_a$ [n, $t_a$-(i-1)h, $t'_a$+(i-1) h, $K_a$ , rc].
Etape 6 :
On calcule numériquement l'abscisse positive $r_c[i]$ de la corde, qui correspond à une hauteur h comprise dans l'intervalle {0,d/2}, en utilisant la fonction :

FindRoot[(1-i)h + $Z_a$[n, $t_a$-(i-1)h, t'$_a$+(i-1)h, $K_a$, $r_c$] = h ;

Etape 7 :
On définit, pour le morceau suivant i+1 :

$$t_a = t_a - ih \; ;$$

$$t'_a = t'_a + ih \; ;$$

Etape 8 :
On définit le morceau suivant i en utilisant les équations précédentes tout en considérant le décalage compensé (c'est-à-dire la translation), ainsi que les distances compensées au diamètre maximal.

$$Z_a[i+1] = \{-ih + Z_a[n, t_a-ih, t'_a + ih, K_a, r],$$

$$(r > -d/2 \text{ et } r=-r_c[i]) \text{ ou } (r<d/2 \text{ et } r >= r_c[i])\};$$

Etape 9 :
On redéfinit alors le domaine pour le secteur précèdent :
(r> -rc [i] et r=$r_c$[1-i]) ou (r <$r_c$[i] et r >=$r_c$[i-1]);
Etape 10 :
On ajoute le morceau à la fonction :
Rule = **Append** [fresnel, piece_$Z_a$[i]];
Etape 11 :
Le compteur de morceaux est alors incrémenté : i=i+1;
Etape 12 :
La boucle est fermée, et le procédé dé définition repasse à l'étape 4.
Etape 13 :
On ajoute le dernier morceau :
Rule = **Append** [fresnel, piece_$Z_a$[i]].
Etape 14 :
On effectue alors la correction de la contremarche de la lentille de Fresnel. Pour ceci, on suit la direction des rayons émergeants en utilisant le traçage de rayons.

Un exemple d'un ensemble de paramètres et de mise en oeuvre d'un algorithme associé au procédé de définition est fourni en Annexe 3, à la fin de cette description.

Le concentrateur 71 et la lentille de Fresnel formée par la surface de Fresnel de la face d'entrée 74, forment donc un ensemble monolithique.

Le télescope 70 comprend de plus une lentille à gradient d'indice 83. La lentille à gradient d'indice 83 est disposée coaxialement par rapport au concentrateur 71 selon l'axe Z. La lentille à gradient d'indice 83 est fabriquée avec un matériau dont l'indice de réfraction change selon une direction radiale, axiale, ou de façon sphérique.

La lentille à gradient d'indice 83 présente une forme cylindrique de section égale à celle de la portion cylindrique 73. La lentille à gradient d'indice 83 s'étend depuis la face de sortie 80 du concentrateur 71.

La lentille à gradient d'indice 83 comporte une face d'entrée 86 qui s'étend en regard de la face de sortie 80 du concentrateur 71.

La face d'entrée 86 de la lentille à gradient d'indice 83 est positionnée contre la face de sortie 80 du concentrateur 71 et est collée à la face de sortie 80. La colle utilisée présente un indice de réfraction semblable à celui du matériau utilisé pour fabriquer le concentrateur 71 et la lentille à gradient d'indice 83.

Le télescope 70, comprenant la lentille à gradient d'indice 83 et le concentrateur 71, forme ainsi un ensemble monolithique.

La deuxième extrémité de la cinquième portion de fibre optique 35 présente ici une section égale à celle de la lentille à gradient d'indice 83. La deuxième extrémité de la cinquième portion de fibre optique 35 débouche en regard de la face de sortie 87 du télescope 70. La deuxième extrémité de la cinquième portion de fibre optique 35 est couplée avec la face de sortie 87 du télescope 70, qui est aussi une face de sortie 87 de la lentille à gradient d'indice 83. Le couplage utilise ici un connecteur APC, mais un autre type de connecteur pourrait être utilisé. On pourrait réaliser le couplage de manière différente, par exemple par collage.

Une virole 84 s'étend autour de la portion cylindrique 73, de la lentille à gradient d'indice 83 et d'une courte longueur de la deuxième extrémité de la cinquième portion de fibre optique 35. La virole 84 consolide la fixation entre eux du concentrateur 71, de la lentille à gradient d'indice 83 et de la deuxième extrémité de la cinquième portion de fibre optique 35.

On décrit maintenant le fonctionnement du télescope 70.

Comme cela est visible sur la figure 1, le télescope 70 s'étend verticalement dans le diffuseur de lumière 25, de sorte que la face d'entrée 74 du télescope 70 débouche sur l'extérieur du système d'éclairage et de communication, en regard de l'espace personnel du passager 2.

Le télescope 70 présente tout d'abord les avantages du concentrateur 71 et de la lentille de Fresnel formée par la surface de Fresnel de la face d'entrée 74. Le télescope 70 permet ainsi de collecter des rayons lumineux incidents avec un angle d'acceptance important. L'angle d'acceptance est ici égal à 34°. Les rayons lumineux incidents pénétrant dans le concentrateur 71 par la face d'entrée 74 sont concentrés par réflexion au niveau de la surface latérale interne de la portion principale 72 du concentrateur elliptique composé 71.

Si seul un concentrateur optique classique était utilisé, les rayons lumineux incidents seraient concentrés sur une bordure de l'extrémité de sortie 75 de la portion principale 72. Grâce à l'utilisation du concentrateur 71 décrit ici, les rayons lumineux incidents sont concentrés sur le centre de l'extrémité de sortie 75, puis redistribués dans la lentille à gradient d'indice 83 et dans toute la section de la deuxième extrémité de la cinquième portion de fibre optique 35.

L'utilisation du télescope 70 permet donc d'optimiser la collecte et la concentration, dans la deuxième extrémité de la cinquième portion de fibre optique 35, de rayons lumineux incidents provenant de l'extérieur du diffuseur de lumière 25 et donc, notamment, de l'espace personnel du passager 2. On améliore donc grandement la réception, par le système d'éclairage et de communication, des signaux lumineux modulés montants émis par le dispositif d'émission et de réception VLC de l'appareil électronique 3 du passager 2 et destinés à être reçus par un récepteur de signaux lumineux modulés 16.

La lumière visible et les signaux lumineux modulés descendants se propagent quant à eux depuis la deuxième extrémité de la cinquième portion de fibre optique 35 jusque dans l'espace personnel du passager 2 via le télescope 70.

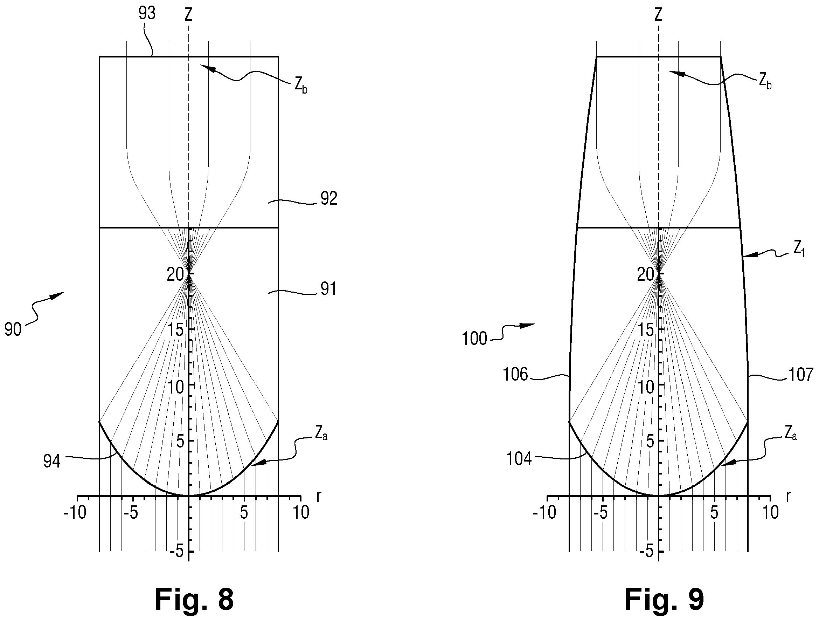

En référence à la figure 8, un télescope 90 d'un système de communication selon un deuxième mode de réalisation de l'invention comporte à nouveau un concentrateur optique 91 et une lentille à gradient d'indice 92.

Une face d'entrée de la lentille à gradient d'indice 92 est collée contre une face de sortie du concentrateur optique 91. Le concentrateur optique 91 et la lentille à gradient d'indice 92 forment ainsi un télescope 90 monolithique. On note que la face de sortie 93 de la lentille à gradient d'indice 92, qui est aussi la face de sortie du télescope 90, est plate. Ceci permet de faciliter le couplage de la deuxième extrémité de la cinquième portion de fibre optique 35 sur la face de sortie 93.

La face d'entrée 94 du concentrateur optique 91 du télescope 90 présente une surface convexe définie par l'équation :

$$Z_a = \frac{n}{n+1}\left(-f_a + \sqrt{f_a^2 - \frac{n+1}{n-1}r^2}\right).$$

La face de sortie 93 est définie par l'équation :

$Z_b = t = f_a + 1$, avec $f_a, l > 0$.

Dans ces équations, $f_a$ est la distance focale image de la lentille formée par la surface convexe de la face d'entrée 94, et n est l'indice du matériau dans lequel est fabriqué le concentrateur optique 91.

En référence à la figure 9, un télescope 100 d'un système de communication selon un troisième mode de réalisation de l'invention est semblable à celui du deuxième mode de réalisation, si ce n'est que la surface latérale est définie, dans un plan de coupe passant par l'axe Z, par un premier arc d'ellipse 106 et par un deuxième arc d'ellipse 107.

La surface latérale interne du télescope permet d'augmenter l'angle d'acceptance. La surface latérale interne réfléchit en effet complètement les rayons lumineux incidents.

La face d'entrée 104 du concentrateur optique 101 du télescope 100 présente à nouveau une surface convexe définie par l'équation :

$$Z_a = \frac{n}{n+1}\left(-f_a + \sqrt{f_a^2 - \frac{n+1}{n-1}r^2}\right).$$

L'invention n'est pas limitée aux modes de réalisation particuliers qui viennent d'être décrits, mais, bien au contraire, couvre toute variante entrant dans le cadre de l'invention tel que défini par les revendications.

On a associé ici à chaque dispositif d'éclairage, comprenant un diffuseur de lumière et un ensemble à fibre optique, un émetteur de signaux lumineux modulés et un récepteur de signaux lumineux modulés. Il est aussi possible d'avoir plusieurs émetteurs et/ou plusieurs récepteurs associés à un même dispositif d'éclairage, chaque émetteur et chaque récepteur étant positionné à une extrémité d'une portion de fibre optique de l'ensemble à fibre optique. Il est aussi possible d'avoir un même émetteur et/ou un même récepteur relié à une pluralité de dispositifs d'éclairage. Le module de communication peut comporter un seul ou plusieurs canaux de communication. On peut ainsi mettre en oeuvre tout type de réseau utilisant tout type de configuration de liaison et de multiplexage, et notamment des liaisons de type MIMO (pour Multiple Input Multiple Output) ou MISO (pour Multiple Input Single Output).

Il aurait été possible de remplacer au moins l'un des deux filtres dichroïques par une couche mince réfléchissante constituée par un matériau réfléchissant déposé dans la zone de raccord correspondante.

Pour réaliser le télescope, on pourra utiliser toute sorte de concentrateur optique, et notamment un concentrateur parabolique composé (ou CPC), un concentrateur couplé comprenant un premier concentrateur intégré dans un deuxième concentrateur, un concentrateur solide ou creux, un concentrateur de type Lens-walled, etc.

Le télescope pourrait être un télescope composé à foyer, un télescope afocal composé, un télescope focal monolithique, un télescope afocal monolithique, etc.

Un exemple d'un télescope afocal monolithique est un télescope comprenant une lentille bi-elliptique et biconvexe. Le plan focal d'un tel télescope est situé à l'intérieur du bloc monolithique formant le télescope.

On a indiqué que la face d'entrée de la lentille à gradient d'indice s'étend en regard de la face de sortie du concentrateur optique. On entend ici soit que la lentille à gradient d'indice est positionnée contre la face de sortie du concentrateur optique, comme c'est le cas dans cette description, soit que la lentille à gradient d'indice et la face de sortie du concentrateur optique sont séparées uniquement par un élément au moins partiellement transparent (une autre lentille, un élément quelconque de fixation, etc.). C'est aussi le cas entre l'extrémité de réception de l'ensemble à fibre optique et la face de sortie de la lentille à gradient d'indice.

On a aussi indiqué que la face d'entrée du télescope peut présenter une surface définie par un ovale cartésien ou une surface de Fresnel. Il serait possible de remplacer cette face d'entrée par une lentille correspondante, c'est-à-dire par une lentille présentant une surface définie par un ovale cartésien ou bien par une lentille de Fresnel, et de positionner cette lentille contre la face d'entrée du concentrateur optique.

Annexe 1

Les coefficients de déformation $A_{2j}$ sont par exemple les suivants :

$$A_4(K_a) = \frac{m P_4 - U^3(1 + K_a)}{V^3},$$

$$A_6(K_a) = 2\left(\frac{m^2 P_6 - U^5(1 + K_a)^2}{V^5}\right),$$

$$A_8(K_a) = 5\left(\frac{m^3 P_8 - U^7(1 + K_a)^3}{V^7}\right),$$

$$A_{10}(K_a) = 2\left(\frac{m^4 P_{10} - 7U^9(1 + K_a)^4}{V^9}\right),$$

$$A_{12}(K_a) = 14\left(\frac{m^5 P_{12} - 3U^{11}(1 + K_a)^5}{V^{11}}\right),$$

$$A_{14}(K_a) = 12\left(\frac{m^6 P_{14} - 11U^{13}(1 + K_a)^6}{V^{13}}\right),$$

Annexe 2

Les polynômes caractéristiques $P_{2j}$ sont par exemple les suivants :

$$P_4 = \left[ n^2 t_a^3 + t_a'^3 + n(t_a + t_a')(t_a^2 - 3 t_a t_a' + t_a'^2) \right],$$

$$P_6 = \left[ \begin{array}{l} n p^2 t_a^5 - 3 n p t_a^4 t_a' - n(3n-1) t_a^3 t_a'^2 - n(n-3) t_a^2 t_a'^3 \\ + 3 n p t_a t_a'^4 - p^2 t_a'^5 \end{array} \right],$$

$$P_8 = \left[ \begin{array}{l} n p^3 t_a^7 - 4 n p^2 t_a^6 t_a' - 4 n m p t_a^5 t_a'^2 - 2n\{n(n-4)-1\} t_a^4 t_a'^3 \\ + 2n\{n(n+4)-1\} t_a^3 t_a'^4 + 4 n m p t_a^2 t_a'^5 - 4 n p^2 t_a t_a'^6 + p^3 t_a'^7 \end{array} \right],$$

$$P_{10} = \left[ \begin{array}{l} 7 n p^4 t_a^9 - 35 n p^3 t_a^8 t_a' - 5n(7n-11) p^2 t_a^7 t_a'^2 - 10n(2n^2 - 11 \\ \times n + 1) p t_a^6 t_a'^3 + 2n(5n^3 + 63n^2 - 15n - 17) t_a^5 t_a'^4 + 2n(17 \\ \times n^3 + 15n^2 - 63n - 5) t_a^4 t_a'^5 + 10n(n^2 - 11n + 2) p t_a^3 t_a'^6 \\ - 5n(11n-7) p^2 t_a^2 t_a'^7 + 35 n p^3 t_a t_a'^8 - 7 p^4 t_a'^9 \end{array} \right],$$

$$P_{12} = \left[ \begin{array}{l} 3 n p^5 t_a^{11} - 18 n p^4 t_a^{10} t_a' - 2n(9n-19) p^3 t_a^9 t_a'^2 - n(11n^2 - 76n \\ + 25) p^2 t_a^8 t_a'^3 + 3 n m p (n^2 + 30n + 5) t_a^7 t_a'^4 + 4n(4n^4 + 11n^3 \\ - 35n^2 - 15n + 3) t_a^6 t_a'^5 + 4n(3n^4 - 15n^3 - 35n^2 + 11n + 4) \\ \times t_a^5 t_a'^6 - 3 n m p(5n^2 + 30n + 1) t_a^4 t_a'^7 - n(25n^2 - 76n + 11) \\ \times p^2 t_a^3 t_a'^8 + 2n(19n-9) p^3 t_a^2 t_a'^9 - 18 n p^4 t_a t_a'^{10} + 3 p^5 t_a'^{11} \end{array} \right],$$

$$P_{14} = \left[ \begin{array}{l} 11 n p^6 t_a^{13} - 77 n p^5 t_a^{12} t_a' - 7n(11n-29) p^4 t_a^{11} t_a'^2 - 7n(7n^2 \\ - 58n + 31) p^3 t_a^{10} t_a'^3 + 7n(n^3 + 67n^2 - 93n + 1) p^2 t_a^9 t_a'^4 + 7n \\ \times (9n^4 + 36n^3 - 162n^2 + 4n + 17) p t_a^8 t_a'^5 + n(63n^5 - 225n^4 \\ - 1330n^3 + 230n^2 + 595n + 27) t_a^7 t_a'^6 - n(27n^5 + 595n^4 \\ + 230n^3 - 1330n^2 - 225n + 63) t_a^6 t_a'^7 - 7n(17n^4 + 4n^3 \\ - 162n^2 + 36n + 9) p t_a^5 t_a'^8 - 7n(n^3 - 93n^2 + 67n + 1) p^2 t_a^4 \\ \times t_b^9 + 7n(31n^2 - 58n + 7) p^3 t_a^3 t_a'^{10} - 7n(29n-11) p^4 t_a^2 t_a'^{11} \\ + 77 n p^5 t_a t_a'^{12} - 11 p^6 t_a'^{13} \end{array} \right].$$

Annexe 3

Un exemple de mise en oeuvre du procédé est le suivant :

```
** Variables initiales: **;


h=0,3; d=20; t_a=-1500; t'_a=70; n=1,7; K_a=-0,47; fres-
nel={};
r_c[0]=0; r_c[1]=0; i=1;
While[r_c[i]<=d/2,


**Calcul du rayon maximal de la corde pour une hauteur h
: **;
{r_c[i] = Replace[r with
FindRoot[(1-i)h+Z_a[n, t_a-(i-1) h, t'_a+(i-1)h, K_a ,r_c] = h,
{r, 0, d/2}]];


** Définition du morceau suivant i + 1 jusqu'au diamètre
maximal.**;
** Les distances objet et image sont compensées: **;
Z_a [i+1]={-ih+Z_a[n, t_a-ih, t'_a+ih, K_a, r],
(r >-d/2 and  r = -r_c[i]) or ((r <d/2 and r>=r_c[i]))};


** Redéfinition du domaine du secteur précèdent: **;
piece_Z_a[i]={(1-i)h + Z_a [n, t_a -(i-1)h, t'_a+(i-1) h, K_a,
r_c],
(r > - r_c [i] and r = r_c[1- i]) or ((r < r_c[i] and r >= r_c
[i -1]))};
 Rule = Append [ fresnel, piece_Z_a[i] ];
 i++;
];
 Rule = Append [fresnel, piece_Z_a[i]];
Piecewise [fresnel]
```

**Revendications**

**1.** Système de communication comportant un ensemble à fibre optique (26), un récepteur de signaux lumineux modulés (16) et un télescope (70), le récepteur de signaux lumineux modulés (16) étant positionné à une extrémité de réception de l'ensemble à fibre optique (26), le télescope (70) étant positionné à une extrémité de collecte de l'ensemble à fibre optique (26), le récepteur de signaux lumineux modulés (16) étant agencé pour recevoir des signaux lumineux modulés montants (62) collectés par le télescope et cheminant dans l'ensemble à fibre optique (26), le télescope (70) comprenant un concentrateur optique (71) ayant une face d'entrée (74) et une face de sortie (80) de surface inférieure à celle de la face d'entrée (74), **caractérisé en ce que** le télescope (70) comprend en outre une lentille à gradient d'indice (83) disposée par rapport au concentrateur optique (71) de sorte qu'une face d'entrée (86) de la lentille à gradient d'indice (83) s'étende en regard de la face de sortie (80) du concentrateur optique (71), l'extrémité de collecte de l'ensemble à fibre optique (26) débouchant en regard d'une face de sortie (87) de la lentille à gradient d'indice (83).

2. Système de communication selon la revendication 1, dans lequel la face d'entrée (74) du concentrateur optique (71) présente une surface de Fresnel.

3. Système de communication selon la revendication dans lequel la surface de Fresnel comprend une pluralité de zones ayant chacune une surface définie par un ovale cartésien.

4. Système de communication selon la revendication 1, dans lequel la face d'entrée (74) du concentrateur optique (71) présente une surface définie par un ovale cartésien.

5. Système de communication selon l'une des revendications précédentes, dans lequel le concentrateur optique (71) est un concentrateur elliptique composé.

6. Système de communication selon l'une des revendications précédentes, dans lequel une surface latérale (78) du concentrateur (71) présente une ou plusieurs facettes latérales du type prismatique.

7. Système de communication selon l'une des revendications précédentes, dans lequel la face d'entrée (86) de la lentille à gradient d'indice (83) est collée à la face de sortie (80) du concentrateur optique (71).

8. Système de communication selon l'une des revendications précédentes, comprenant un émetteur de lumière visible (9) positionné à une extrémité d'éclairage de l'ensemble à fibre optique (26), l'émetteur de lumière visible étant agencé pour générer une lumière visible qui se propage dans l'ensemble à fibre optique (26) pour déboucher à l'extérieur via l'extrémité de collecte et le télescope (70) .

9. Système de communication selon l'une des revendications précédentes, comprenant un émetteur de signaux lumineux modulés (15) positionné à une extrémité d'émission de l'ensemble à fibre optique (26), l'émetteur de signaux lumineux modulés étant agencé pour produire des signaux lumineux modulés descendants (61) qui cheminent dans l'ensemble à fibre optique (26) et sont transmis à l'extérieur via l'extrémité de collecte et le télescope (70) .

**Patentansprüche**

1. Kommunikationssystem, eine Anordnung mit Glasfasern (26) beinhaltend, einen Empfänger von modulierten Lichtsignalen (16) und ein Teleskop (70), wobei der Empfänger von modulierten Lichtsignalen (16) an einem Empfangende der Glasfaseranordnung (26) positioniert ist, wobei das Teleskop (70) an einem Sammelende der Glasfaseranordnung (26) positioniert ist, wobei der Empfänger von modulierten Lichtsignalen (16) angeordnet ist, um ansteigende modulierte Lichtsignale (62) zu empfangen, die vom Teleskop gesammelt werden, und in der Glasfaseranordnung (26) verlaufen, wobei das Teleskop (70) einen optischen Konzentrator (71) umfasst, der eine Eintrittsfläche (74) hat und eine Austrittsfläche (80) der Oberfläche, die unter derjenigen der Eintrittsfläche (74) ist, **dadurch gekennzeichnet, dass** das Teleskop (70) ferner eine Gradientenlinse (83) umfasst, die in Bezug auf den optischen Konzentrator (71) so arrangiert ist, dass sich eine Eintrittsfläche (86) der Gradientenlinse (83) gegenüber der Austrittsfläche (80) des optischen Konzentrators (71) erstreckt, wobei das Sammelende der Glasfaseranordnung (26) gegenüber einer Austrittsfläche (87) der Gradientenlinse (83) ausmündet.

2. Kommunikationssystem nach Anspruch 1, wobei die Eintrittsfläche (74) des optischen Konzentrators (71) eine Fresnel-Oberfläche aufweist.

3. Kommunikationssystem nach Anspruch 2, wobei die Fresnel-Oberfläche eine Vielzahl von Zonen umfasst, die jeweils eine Oberfläche haben, die durch ein Kartesisches Oval definiert ist.

4. Kommunikationssystem nach Anspruch 1, wobei die Eintrittsfläche (74) des optischen Konzentrators (71) eine Oberfläche aufweist, die durch ein Kartesisches Oval definiert ist.

5. Kommunikationssystem nach einem der vorhergehenden Ansprüche, wobei der optische Konzentrator (71) ein zusammengesetzter elliptischer Konzentrator ist.

6. Kommunikationssystem nach einem der vorhergehenden Ansprüche, wobei eine seitliche Oberfläche (78) des Konzentrators (71) eine oder mehrere seitliche Facetten vom Prismatyp aufweist.

7. Kommunikationssystem nach einem der vorhergehenden Ansprüche, wobei die Eintrittsfläche (86) der Gradientenlinse (83) mit der Austrittsfläche (80) des optischen Konzentrators (71) verklebt ist.

8. Kommunikationssystem nach einem der vorhergehenden Ansprüche, einen Emitter von sichtbarem Licht (9) umfassend, der an einem Beleuchtungsende der Glasfaseranordnung (26) positioniert ist, wobei der Emitter von sichtbarem Licht angeordnet ist, um ein sichtbares Licht zu erzeugen, das sich in der Glasfaseranordnung (26) ausbreitet, um über das Sammelende und das Teleskop (70) nach außen auszumünden.

9. Kommunikationssystem nach einem der vorhergehenden Ansprüche, einen Emitter von modulierten Lichtsignalen (15) umfassend, der an einem Emissionsende der Glasfaseranordnung (26) positioniert ist, wobei der Emitter von modulierten Lichtsignalen angeordnet ist, um abwärtsmodulierte Lichtsignale (61) zu erzeugen, die in der Glasfaseranordnung (26) verlaufen, und über das Sammelende und das Teleskop (70) nach außen übertragen werden.

**Claims**

1. A communication system comprising an optical fiber assembly (26), a modulated light signal receiver (16) and a telescope (70), the modulated light signal receiver (16) being positioned at a receiving end of the optical fiber assembly (26), the telescope (70) being positioned at a collecting end of the optical fiber assembly (26), the modulated light signal receiver (16) being arranged to receive uplink modulated light signals (62) collected by the telescope and travelling in the optical fiber assembly (26), the telescope (70) comprising an optical concentrator (71) having an inlet face (74) and an outlet face (80) with a surface area smaller than that of the inlet face (74), **characterized in that** the telescope (70) further comprises a gradient-index lens (83) disposed with respect to the optical concentrator (71) so that an inlet face (86) of the gradient-index lens (83) extends opposite the outlet face (80) of the optical concentrator (71), the collecting end of the optical fiber assembly (26) opening out opposite an outlet face (87) of the gradient-index lens (83).

2. The communication system according to claim 1, wherein the inlet face (74) of the optical concentrator (71) has a Fresnel surface.

3. The communication system according to claim 2, wherein the Fresnel surface comprises a plurality of areas each having a surface defined by a Cartesian oval.

4. The communication system according to claim 1, wherein the inlet face (74) of the optical concentrator (71) has a surface defined by a Cartesian oval.

5. The communication system according to any one of the preceding claims, wherein the optical concentrator (71) is a compound elliptical concentrator.

6. The communication system according to any one of the preceding claims, wherein a lateral surface (78) of the concentrator (71) has one or more lateral facets of the prismatic type.

7. The communication system according to any one of the preceding claims, wherein the inlet face (86) of the gradient-index lens (83) is bonded to the outlet face (80) of the optical concentrator (71).

8. The communication system according to any one of the preceding claims, comprising a visible light transmitter (9) positioned at an illumination end of the optical fiber assembly (26), the visible light transmitter being arranged to generate visible light that propagates through the optical fiber assembly (26) to open outwardly via the collecting end and the telescope (70).

9. The communication system according to any one of the preceding claims, comprising a modulated light signal transmitter (15) positioned at a transmitting end of the optical fiber assembly (26), the modulated light signal transmitter being arranged to produce downlink modulated light signals (61) which travel through the optical fiber assembly (26) and are transmitted externally via the collecting end and the telescope (70).

Fig. 1

**Fig. 2**

EP 3 948 374 B1

**Fig. 3**

Fig. 4

**Fig. 5**

**Fig. 6**

**Fig. 7**

**Fig. 8**

**Fig. 9**

EP 3 948 374 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 0025163 A1

**Littérature non-brevet citée dans la description**

- **ZHOU GENDI et al.** Design of Plastic Optical Fiber Coupling system based on GRIN Lens for Enlarging the Field-of-View of VLC System. *2017 ASIA COMMUNICATIONS AND PHOTONICS CONFERENCE (ACP), THE OPTICAL SOCIETY,* 10 Novembre 2017